# EUROPÄISCHE PATENTSCHRIFT

(11) **EP 0 564 404 B1**
(45) Veröffentlichungstag und Bekanntmachung des Hinweises auf die Patenterteilung: **25.06.1997**
(21) Anmeldenummer: 93810208.4
(22) Anmeldetag: 23.03.1993
(51) Int. Cl.: D06P 3/32, C09B 67/00

(54) **Verfahren zum Färben von Leder mit Farbstoffmischungen**
Process for leather dyeing with mixtures of dyes
Procédé de teinture du cuir avec des mélanges de colorants

(30) Priorität: 01.04.1992 CH 1053/92
(43) Veröffentlichungstag der Anmeldung: 06.10.1993
(73) Patentinhaber: Ciba Specialty Chemicals Holding Inc., 4057 Basel (CH)
(72) Erfinder: Moser, Peter, Dr., CH-4102 Binningen (CH); Page, Campbell Thomas, Dr., CH-4051 Basel (CH); Püntener, Alois, Dr., CH-4310 Rheinfelden (CH)

(56) Entgegenhaltungen:
- EP-A- 0 181 292
- CH-A- 191 165
- DE-A- 3 326 954
- FR-A- 2 133 803
- FR-A- 2 201 329
- GB-A- 2 226 336
- K. VENKATARAMAN 'The chemistry of synthetic dyes. Band I' , ACADEMIC PRESS , LONDON, GB
- CHEMICAL ABSTRACTS, vol. 102, 14. Januar 1985, Columbus, Ohio, US; abstract no. 8244, CHEKALIN, M. A. ET AL. 'Acid disazo dye'
- CHEMICAL ABSTRACTS, vol. 90, 19. März 1979, Columbus, Ohio, US; abstract no. 88722, ZANIC, JURAJ 'Effect of constitution on the hue and dyeing properties of dyes'

## Beschreibung

Die vorliegende Erfindung betrifft ein Verfahren zum Färben von Leder mit Farbstoffmischungen, insbesondere ein Verfahren zum Trichromiefärben von Leder, sowie das nach dem Verfahren gefärbte Leder.

DE-A-3 326 954 beschreibt rote Monoazofarbstoffe, die sich zum Anfärben von Leder eignen. Es wird erwähnt, daß diese Farbstoffe gute kombinierbarheit mit bekannten Farbstoffen gleicher kategorie, vor allem in Trichromie besitzen.

Verfahren zum Färben von Leder mit Farbstoffmischungen, auch das Trichromiefärben von Leder, sind bereits bekannt und werden auch in der Praxis mit grossem Erfolg angewendet GB-A-2 226 336; EP-A-0 061 670. Die bekannten Farbstoffmischungen sind jedoch zum Färben in brillanten Farbtönen nur bedingt geeignet und das Trichromiefärben von Leder in brillanten Tönen ist mit den bekannten Farbstoffmischungen bisher nicht möglich. Beim Trichromiefärben werden nämlich besondere Anforderungen an die Kombinierbarkeit der verwendeten Farbstoffe gestellt, um einen gleichmässigen Farbaufbau zur Erzielung nuancenkonstanter, reproduzierbarer Färbungen in unterschiedlichen Konzentrationen zu gewährleisten. Ausserdem sollten die genannten Bedingungen für Ledersorten verschiedener Herkunft und unterschiedlicher Vorbehandlung erfüllt sein.

Der vorliegenden Erfindung lag die Aufgabe zugrunde, ein Verfahren zum Färben von Leder mit Farbstoffmischungen zur Verfügung zu stellen, nach dem das Färben in brillanten Nuancen möglich ist. Besonders geeignete Farbstoffmischungen sollten darüber hinaus auch das Trichromiefärben von Leder in brillanten Tönen ermöglichen.

Diese Aufgabe wird durch das erfindungsgemässe Verfahren gelöst.

Gegenstand der Erfindung ist somit ein Verfahren zum Färben von Leder mit Farbstoffmischungen, welches dadurch gekennzeichnet ist, dass man mindestens zwei metallfreie Farbstoffe mit jeweils einer einzigen Sulfo- oder Carboxygruppe und einem Molekulargewicht zwischen 450 und 700 verwendet.

Die Ausführungsform des erfindungsgemässen Verfahrens besteht darin, dass man mindestens zwei Farbstoffe verwendet, ausgewählt aus der Gruppe, bestehend aus
a) einem gelben Farbstoff der Formel 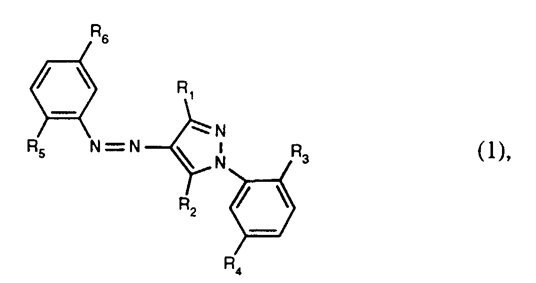 worin
   R₁ C₁-C₄-Alkyl,
   R₂ OH oder NH₂,
   R₃ Wasserstoff oder Halogen,
   R₄ Wasserstoff oder Sulfo,
   R₅ Wasserstoff, Halogen, Sulfo oder eine Gruppe 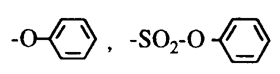 oder 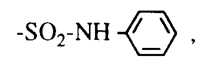 wobei die Phenylreste in den drei letztgenannten Gruppen durch Halogen substituiert sein können, und
   R₆ Wasserstoff, Halogen oder eine Gruppe 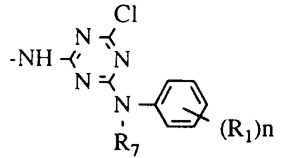 bedeutet, worin R₇ Wasserstoff oder C₁-C₄-Alkyl,R₁ C₁-C₄-Akyl und n 0, 1, 2 oder 3 bedeutet,
b) einem roten Farbstoff der Formel 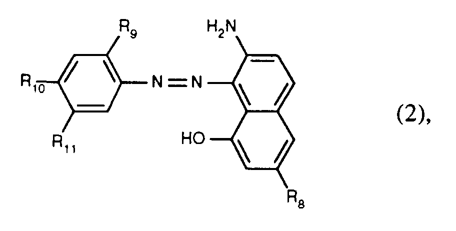 worin
   R₈ Sulfo oder 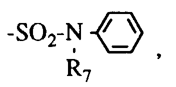
   R₉ Sulfo, 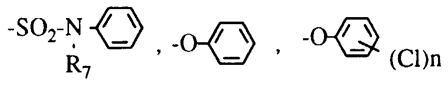 oder eine Gruppe 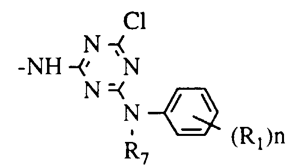 bedeutet, worin R₇ Wasserstoff oder C₁-C₄-Alkyl, R₁ C₁-C₄-Alkyl und n 1, 2 oder 3 bedeutet,
   R₁₀ Wasserstoff, C₁-C₄-Alkylcarbonylamino oder Halogen-C₁-C₄-alkylcarbonylamino und
   R₁₁ Wasserstoff oder Halogen bedeutet, und
c) einem blauen Farbstoff der Formel 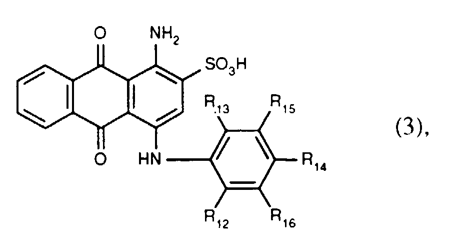 worin R₁₂, R₁₃ und R₁₄ unabhängig voneinander je Wasserstoff oder C₁-C₄-Alkyl,
   R₁₅ Wasserstoff, Methyl, -SO₂-NH-R₁₇ oder -CH₂-NH-CO-R₁₈ und
   R₁₆ Wasserstoff, C₁-C₄-Alkyl oder R₁₅ bedeutet, wobei R₁₇ Hydroxy-C₁-C₄-Alkyl und
   R₁₈ Phenyl oder Halogen-C₁-C₄-alkyl bedeutet.

Die Farbstoffe der Formeln (1), (2) und (3) besitzen jeder eine einzige Sulfogruppe.

Die Alkylgruppen können linear oder verzweigt sein. Als C₁-C₄-Alkyl kommen somit Methyl, Ethyl, n- oder iso-Propyl sowie n-, iso-, sec.- oder tert.-Butyl in Betracht. Bevorzugt unter diesen sind Methyl und Ethyl.

Halogen bedeutet Fluor, Brom, Jod oder vor allem Chlor.

Zum Trichromiefärben nach dem erfindungsgemässen Verfahren verwendet man vorzugsweise eine Farbstoffmischung, enthaltend einen gelben Farbstoff der Formel (1), einen roten Farbstoff der Formel (2) und einen blauen Farbstoff der Formel (3).

Bei den Farbstoffen der Formel (1) bedeutet R₁ vorzugsweise Methyl. R₃ bedeutet vorzugsweise Chlor und R₄ bedeutet vorzugsweise Sulfo oder Wasserstoff.

Bevorzugte Bedeutungen von R₅ sind Sulfo oder eine Gruppe 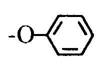 oder 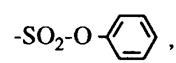 wobei die Phenylreste in den beiden letztgenannten Gruppen unsubstituiert oder durch Chlor substituiert sind.

Bevorzugte Bedeutungen von R₆ sind Wasserstoff, Chlor oder eine Gruppe 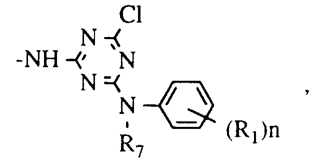 worin R₇ Wasserstoff, Methyl oder Ethyl, R₁ Methyl und n 0, 1 oder 2 bedeutet.

Eine besonders bevorzugte Ausführungsform des erfindungsgemässen Verfahrens besteht darin, dass man den gelben Farbstoff der Formel 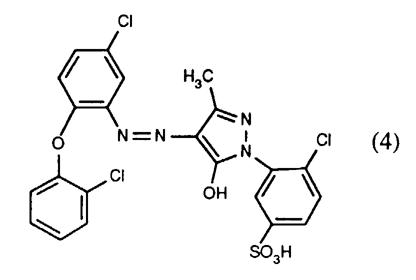 verwendet.

Eine weitere bevorzugte Ausführungsform des erfindungsgemässen Verfahrens ist dadurch gekennzeichnet, dass man einen roten Farbstoff der Formel (2) verwendet, worin R₈ Sulfo oder 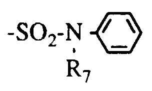 bedeutet, wobei R₇ Methyl oder Ethyl bedeutet.

Ausserdem ist die Verwendung solcher Farbstoffe der Formel (2) bevorzugt, worin R₉ Sulfo, 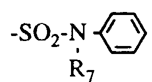 oder 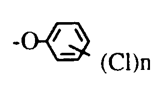 bedeutet, wobei R₇ Methyl oder Ethyl und n 1 bedeutet.

Ausserdem ist die Verwendung solcher Farbstoffe der Formel (2) bevorzugt, worin R₁₀ Wasserstoff oder Chlormethylcarbonylamino bedeutet, sowie solcher Farbstoffe der Formel (2), worin R₁₁ Wasserstoff oder Chlor bedeutet.

Eine ganz besonders bevorzugte Ausführungsform des erfindungsgemässen Verfahrens besteht darin, dass man den roten Farbstoff der Formel 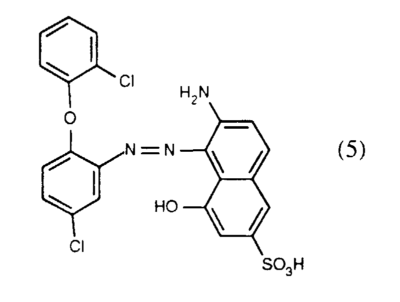 verwendet.

Eine weitere bevorzugte Ausführungsform des erfindungsgemässen Verfahrens ist dadurch gekennzeichnet, dass man einen blauen Farbstoff der Formel (3) verwendet, worin R₁₄ Methyl und R₁₂ und R₁₃ Wasserstoff oder Methyl bedeuten.

Ausserdem ist die Verwendung solcher Farbstoffe der Formel (3) bevorzugt, worin R₁₅ Wasserstoff, Methyl oder -CH₂-NH-CO-CH₂-Cl bedeutet, sowie solcher Farbstoffe der Formel (3), worin R₁₆ -SO₂-NH-C₂H₄-OH, -CH₂-NH-CO-CH₂-Cl oder -CH₂-NH-CO-C₆H₅ bedeutet.

Eine ganz besonders bevorzugte Ausführungsform des erfindungsgemässen Verfahrens besteht darin, dass man den blauen Farbstoff der Formel 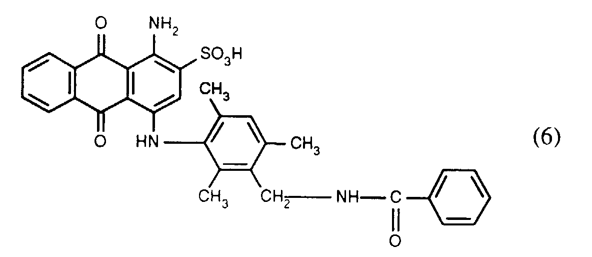 verwendet.

Ausserdem ist es bevorzugt, im erfindungsgemässen Verfahren mindestens zwei Farbstoffe zu verwenden, deren Parachor zwischen 900 und 1200 liegt und deren log P zwischen 1 und 4 liegt. Der Parachor wird dabei gemäss dem Artikel von O. R. Quayle [Chem. Rev. 53 439 (1953)] berechnet und log P bedeutet die relative Lipophilität, deren Berechnung von C. Hansch et al. [J. Med. Chem. 16, 1207 (1973)] beschrieben wurde.

Eine ganz besonders wichtige Ausführungsform des erfindungsgemässen Verfahrens besteht darin, dass man zum Trichromiefärben eine Farbstoffmischung, enthaltend den gelben Farbstoff der Formel (4), den roten Farbstoff der Formel (5) und den blauen Farbstoff der Formel (6), verwendet.

Zusätzlich zu den Farbstoffen der Formeln (2), (3) oder (4) kann man im erfindungsgemässen Färbeverfahren noch weitere Farbstoffe einsetzen. Dies kann z.B. zweckmässig sein, wenn die Nuance trüber oder dunkler oder in etwas geändertem Farbton ausfallen soll, als sie mit den genannten Farbstoffen erreichbar ist. Vorzugsweise setzt man als weitere Farbstoffe solche ein, die ebenfalls eine Sulfo- oder Carboxygruppe und ein Molekulargewicht zwischen 450 und 700 aufweisen.

Wegen der guten Kombinierbarkeit mit den Farbstoffen der Formeln (2), (3) oder (4) verwendet man als zusätzlichen Farbstoff vor allen Dingen einen schwarzen Farbstoff der Formel 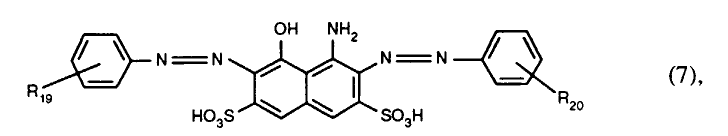 worin R₁₉ Wasserstoff, C₁-C₄-Alkyl, C₁-C₄-Alkoxy oder C₁-C₄-Alkanoylamino und R₂₀ Chlor oder Nitro bedeutet,
oder einen braunen Farbstoff der Formel 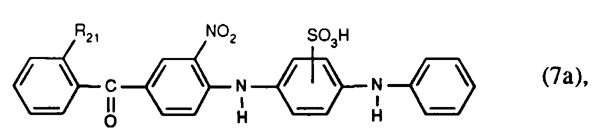 worin R₂₁ -COOH, -CONH₂, -SO₃H oder -SO₃NH₂ bedeutet.

Als zusätzlichen schwarzen Farbstoff verwendet man vorzugsweise den schwarzen Farbstoff der Formel 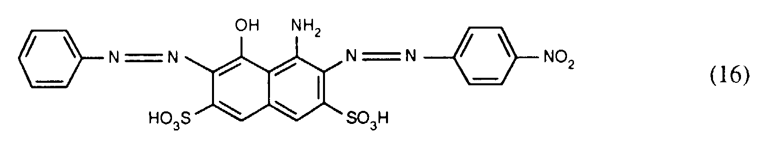 und als zusätzlichen braunen Farbstoff verwendet man vorzugsweise den braunen Farbstoff der Formel

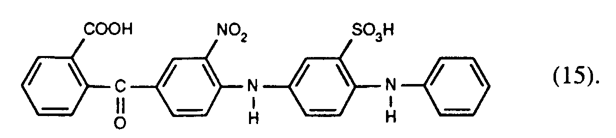

Die erfindungsgemässen Farbstoffe sind anionischer Natur und werden vorteilhaft in Form ihrer Salze, insbesondere Alkalisalze oder Ammoniumsalze, eingesetzt. Als Alkalisalze kommen vor allem die Lithium-, Kalium- oder Natriumsalze in Betracht und unter Ammoniumsalzen sind auch Salze organischer Amine zu verstehen, z.B. solcher, die mit C₁-C₆-Alkyl- oder Hydroxy-C₁-C₆-alkylgruppen substituiert sind.

Die im erfindungsgemässen Verfahren verwendeten Farbstoffe sind bekannt oder können auf an sich bekannte Art und Weise hergestellt werden.

Die Mengen, in denen die erfindungsgemäss verwendeten Farbstoffe in den Färbebädern eingesetzt werden, können je nach der gewünschten Farbtiefe in weiten Grenzen schwanken. Im allgemeinen sind Farbstoffmengen von 0,1 bis 10, vorzugsweise 0,5 bis 4 Gew.%, bezogen auf das Gewicht des zu färbenden Leders, vorteilhaft.

Neben Wasser und den Farbstoffen kann die Färbeflotte noch weitere Zusätze enthalten, z.B. Säuren, Basen oder Salze zur Einstellung des gewünschten pH-Wertes, sowie Hilfsmittel, wie z.B. Netzmittel, Fettungsmittel, farbvertiefende Hilfsmittel, Egalisiermittel, Penetrationsmittel und/oder Antischaummittel.

Das erfindungsgemässe Verfahren weist den grossen Vorteil auf, dass es nicht nur für einen bestimmten Ledertyp geeignet, sondern auf die verschiedenen Ledertypen anwendbar ist, beispielsweise auf Chromleder, nachgegerbtes Leder oder Velourleder von Ziege, Rind oder Schwein.

Das Färben erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100° C, vorzugsweise 30 bis 60° C. Falls erwünscht oder erforderlich, kann das Leder einer Vorbehandlung unterworfen werden, beispielsweise einer Neutralisation oder Walke.

Die Färbedauer schwankt je nach Art des Leders und der gewünschten Farbtiefe, liegt im allgemeinen jedoch zwischen 30 und 180 Minuten. Im Anschluss an die Färbung wird das Leder gespült und wie üblich fertiggestellt.

Man erhält nach dem erfindungsgemässen Verfahren Lederfärbungen in brillanten Farbtönen und mit guten Echtheiten, wie z.B. Licht- und Nassechtheiten. Da die einzelnen Farbstoffe etwa gleich tief in das Leder eindringen, ist die Nuance der Färbungen an der Oberfläche und in tieferen Schichten des Leders gleich.

Für den Einsatz zum Färben werden die einzelnen Farbstoffe miteinander vermischt. Die Farbstoffe können dabei einzeln als Stammlösungen für das Färbeverfahren vorbereitet oder zusammen in eine einzige Stammlösung formuliert werden.

Die Farbstofftrichromie-Mischungen, enthaltend mindestens einen gelben Farbstoff der Formel (1), mindestens einen roten Farbstoff der Formel (2) und mindestens einen blauen Farbstoff der Formel (3), sind aus der EP-A-0 181 292 bekannt.

Bevorzugt verwendete Farbstofftrichromie-Mischungen enthalten 1 bis 98 Gew.% eines gelben Farbstoffes der Formel (1), 1 bis 98 Gew.% eines roten Farbstoffes der Formel (2) und 1 bis 98 Gew.% eines blauen Farbstoffes der Formel (3), insbesondere 10 bis 70 Gew.% eines gelben Farbstoffes der Formel (1), 10 bis 50 Gew.% eines roten Farbstoffes der Formel (2) und 10 bis 50 Gew.% eines blauen Farbstoffes der Formel (3).

Die nachfolgenden Beispiele veranschaulichen die Erfindung, ohne sie darauf zu beschränken. Teile bedeuten Gewichtsteile und Prozente Gewichtsprozente. Die Farbstoffe werden in handelsüblicher Pulver- oder Flüssigform eingesetzt.

Beispiel 1: 100 Teile chromgegerbtes Rindleder (Falzgewicht) werden 15 Minuten lang in 300 Teilen Wasser bei 30°C gewaschen und anschliessend 60 Minuten in einer aus 300 Teilen Wasser, 2 Teilen Neutralisationsmittel (Na- Salze aromatischer Sulfosäuren und aliphatischer Dicarbonsäuren) und 0,5 Teilen Natriumbicarbonat bestehenden Flotte bei 30°C neutralisiert. Anschliessend folgt eine 15 Minuten dauernde Waschoperation in 300 Teilen Wasser bei Raumtemperatur.

Das derart behandelte Leder wird nun in einer frisch angesetzten Flotte aus 300 Teilen Wasser und 2,46 Teilen der Farbstoffmischung, bestehend aus 1,88 Teilen des gelben Farbstoffes der Formel 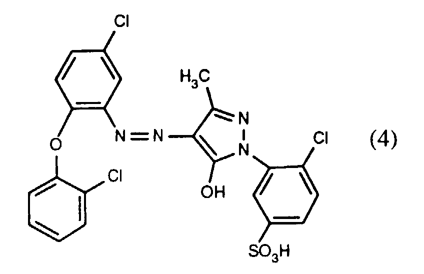 und 0,58 Teilen des blauen Farbstoffes der Formel

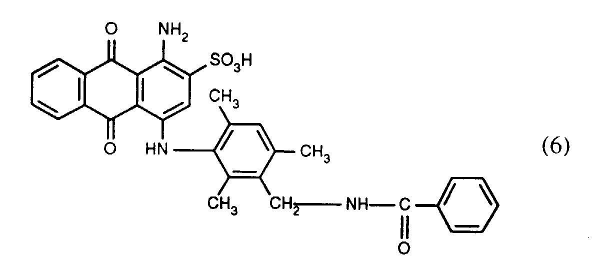

30 Minuten bei 50°C gefärbt. Dann werden der Färbeflotte 3 Teile eines synthetischen Fettungsmittels (Zubereitung auf Basis von sulfonierten aliphatischen Kohlenwasserstoffen, Fettsäuren und deren Derivate) und nach weiteren 30 Minuten 0,5 Teile 85 %ige Ameisensäure zugesetzt. Man färbt noch 30 Minuten bei unveränderter Temperatur weiter und stellt das gefärbte Leder nach dem Spülen wie üblich fertig.

Man erhält ein egales grüngefärbtes Leder mit guten Echtheiten und reiner Nuance. Die Kombinierbarkeit der verwendeten Farbstoffe ist besonders gut. Wenn die Lederoberfläche leicht angeschliffen wird, sieht man, dass beide Farbstoffe Leder gleich tief eingefärbt haben.

Beispiel 2: 100 Teile Chromrindleder (Falzgewicht) werden nach den Angaben im Beispiel 1 neutralisiert und dann bei 30°C in gleicher Flotte mit 7 Teilen eines flüssigen synthetischen Nachgerbstoffes (Kondensationsprodukte von polyphenolischen Sulfosäuren mit Formaldehyd und Harnstoff) weitere 60 Minuten behandelt. Danach folgt ein Waschprozess von 15 Minuten Dauer in 300 Teilen Wasser bei Raumtemperatur. Dieses nachgegerbte Chromrindleder wird anschliessend bei 50° C in einer Flotte, bestehend aus 300 Teilen Wasser sowie 4,92 Teilen der im Beispiel 1 eingesetzten Farbstoffmischung, gefärbt. Nach einer Färbedauer von 30 Minuten erfolgt ein Zusatz von 3 Teilen des synthetischen Fettungsmittels aus Beispiel 1 und nach weiteren 30 Minuten eine Zugabe von 1 Teil 85 %iger Ameisensäure. Nach dem Ansäuern wird die Behandlung noch 30 Minuten bei 50°C fortgesetzt. Anschliessend wird in kaltem Wasser gespült und fertiggestellt. Die erhaltene reine grüne Färbung zeichnet sich durch gute Echtheitseigenschaften und eine reine Nuance aus. Die Kombinierbarkeit der Farbstoffe ist auch auf diesem Leder sehr gut, was wie im Beispiel 1 geprüft wird. Ausserdem stimmt die Färbung im Farbton weitgehend überein mit der nach Beispiel 1 auf nicht nachgegerbtem Chromrindleder mit der gleichen Farbstoffmischung erhalten Ausfärbung.

Beispiel 3: Arbeitet man wie im Beispiel 2 beschrieben, verwendet jedoch anstelle des dort eingesetzten Nachgerbstoffs 3 Teile eines stark anionischen Nachgerbstoffs (Formaldehyd-Kondensationsprodukt von phenolischen Sulfosäuren), so erhält man Leder mit einer sehr anionischen Oberfläche.
Die erhaltene Färbung stimmt vom Farbton her weitgehend überein mit derjenigen auf nicht nachgegertem Chromrindleder nach Beispiel 1 und derjenigen auf nachgegerbtem Chromrindleder nach Beispiel 2.

Beispiel 4: Arbeitet man wie im Beispiel 1 beschrieben, verwendetjedoch anstelle der dort eingesetzten Farbstoffmischung 1,88 Teile einer Farbstoffmischung, bestehend aus 0,92 Teilen des gelben Farbstoffs der Formel (4), 0,50 Teilen des blauen Farbstoffs der Formel (6) und 0,46 Teilen des roten Farbstoffs der Formel 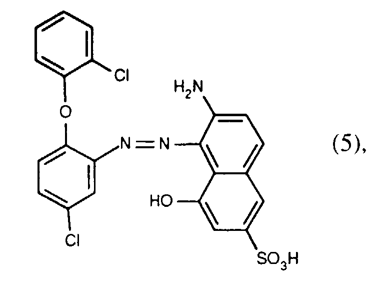 so erhält man rotbraun gefärbtes Leder.

Die Kombinierbarkeit der Farbstoffe ist sehr gut. Wenn die Lederoberfläche leicht angeschliffen wird, sieht man, dass alle Farbstoffe Leder gleich tief färben.

Beispiel 5: Arbeitet man wie im Beispiel 2 beschrieben, verwendet jedoch anstelle der dort eingesetzten Farbstoffmischung 3,76 Teile der im Beispiel 4 eingesetzten Farbstoffmischung, so erhält man eine Färbung, die im Farbton ebenfalls mit der auf nicht nachgegerbtem Chromrindleder nach Beispiel 4 erhaltenen Ausfärbung übereinstimmt.

Beispiel 6: 100 Teile Chromrindleder (Falzgewicht) werden nach den Angaben im Beispiel 2 neutralisiert und nachgegerbt und danach in einer Flotte, enthaltend 300 Teile Wasser, 2,5 Teile des Farbstoffes der Formel (4) und 0.8 Teile des Farbstoffes der Formel (6) während 30 Minuten bei 50°C gefärbt. Nach 30 Minuten erfolgt ein Zusatz von 3 Teilen des synthetischen Fettungsmittels aus Beispiel 1 und nach weiteren 30 Minuten eine Zugabe von 1 Teil 85 %iger Ameisensäure. Nach dem Ansäuern wird die Behandlung noch 30 Minuten bei 50°C fortgesetzt.

Anschliessend wird in einem frischen Bad noch mit 1 Teil eines farbvertiefenden Hilfsmittel (polyquaternäres Amin-Äthylenoxid-Addukt) in 300 Teilen Wasser das Leder nachbehandelt. Nach einer Behandlungsdauer von 15 Minuten wird dem Färbebad eine halbe Menge der obengenannten Farbstoffe zugesetzt und danach 15 Minuten bei 50°C weitergefärbt. Dann erfolgt ein Zusatz von 0,25 Teilen 85 %iger Ameisensäure. Nach weiteren 20 Minuten ist die Färbung beendet. Es wird dann in kaltem Wasser gespült.

Die wie üblich fertiggestellte Färbung zeichnet sich durch gute Echtheiten und einen vollen, reinen grünen Farbton aus. Sie ist wesentlich voller und stärker als eine entsprechende Färbung ohne das farbvertiefende Hilfsmittel. Gleiche Ergebnisse erhält man auch mit den anderen Farbstoffmischungen aus den Farbstoffen der Formeln (4), (5) und (6).

Beispiel 7: 100 Teile chromgares Bekleidungsveloursleder (Trockengewicht) werden bei 50°C in einer Lösung von 1000 Teilen Wasser und 2 Teilen 24 %igem Ammoniak während 60 Minuten aufgewalkt. Danach folgt ein Waschprozess von 15 Minuten Dauer in 1000 Teilen Wasser von 50°C.

Nach diesen vorbereitenden Operationen wird das Leder in einer Flotte aus 1000 Teilen Wasser, 2 Teilen Ammoniak 24%ig und 19,68 Teilen der im Beispiel 1 eingesetzten Farbstoffmischung bei 50°C gefärbt.

Nach einer Färbedauer von 60 Minuten wird mit 4 Teilen 85 %iger Ameisensäure angesäuert und hierauf noch 20 Minuten weitergefärbt.

Die Fertigstellung des gefärbten Leders erfolgt nach einer Behandlung in frischem Bad mit 1000 Teilen Wasser, 2,5 Teilen eines Kondensationsproduktes aus Formaldehyd, Dicyandiamid, Ammoniumchlorid und Ethylendiamin sowie 0,5 Teilen 85 %iger Ameisensäure während 45 Minuten bei 50°C. Das erhaltene gefärbte Leder besitzt einen reinen grünen Farbton. Es zeichnet sich durch gute Echtheiten und gutes Deckvermögen aus.

Beispiel 8: 100 Teile Chromspaltvelours-Leder (Trockengewicht) werden in 1000 Teilen Wasser und 2 Teilen 24 %igem Ammoniak 60 Minuten lang bei 50°C aufgewalkt und anschliessend mit 1000 Teilen Wasser von 50°C während 15 Minuten gewaschen.

Das derart vorbereitete Leder wird nun in einer frischen Flotte, bestehend aus 1000 Teilen Wasser, 2 Teilen 24%igem Ammoniak und 9,84 Teilen der im Beispiel 1 eingesetzten Farbstoffmischung, bei 50°C gefärbt. Nach 60 Minuten fügt man noch 4 Teile 85 %ige Ameisensäure hinzu und färbt weitere 20 Minuten bei diese Temperatur.

Das gefärbte Leder wird in kaltem Wasser gespült und fertiggestellt. Man erhält eine reine grüne Färbung, die sich durch gute Echtheiten und Nuancengleichheit zwischen Velours- und Fleischseite auszeichnet.

Beispiel 9: Arbeitet man wie im Beispiel 1 beschrieben, verwendet jedoch anstelle der dort eingesetzten Farbstoffmischung 1,38 Teile einer Farbstoffmischung, bestehend aus 0,5 Teilen des gelben Farbstoffes der Formel 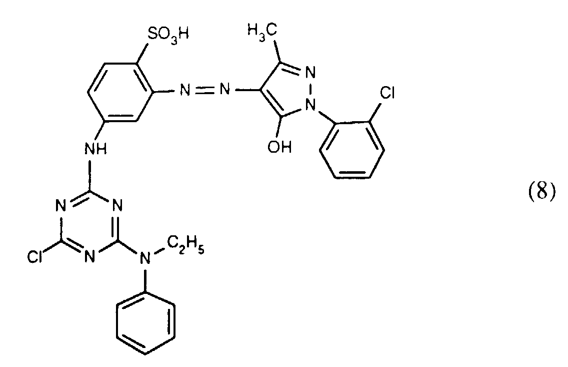 und 0,88 Teile des blauen Farbstoffes der Formel (6), so erhält man ein farbstark mittelgrün gefärbtes Leder.

Beispiel 10: Arbeitet man wie im Beispiel 2 beschrieben, verwendet jedoch anstelle der dort eingesetzten Farbstoffmischung 2,76 Teile der im Beispiel 9 eingesetzten Farbstoffmischung, so erhält man eine Färbung, die im Farbton ebenfalls mit der auf nicht nachgegerbtem Leder Chromrindleder nach Beispiel 9 erhaltenen Ausfärbung übereinstimmt.

Beispiel 11: Arbeitet man wie im Beispiel 1 beschrieben, verwendet jedoch anstelle der dort eingesetzten Farbstoffmischung 1,5 Teile einer Farbstoffmischung, bestehend aus 0,5 Teilen des gelben Farbstoffes der im Beispiel 9 angegebenen Formel (8) und 1,0 Teilen des blauen Farbstoffes der Formel 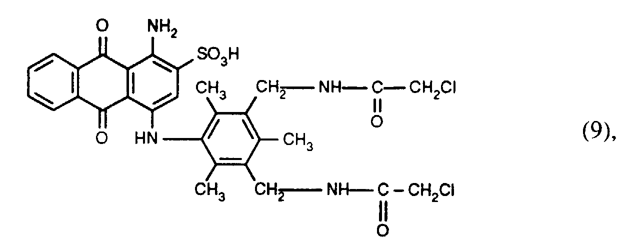 so erhält man ein farbstark grün gefärbtes Leder.

Beispiel 12: Arbeitet man wie im Beispiel 2 beschrieben, verwendet jedoch anstelle der dort eingesetzten Farbstoffmischung 3,00 Teile der im Beispiel 11 eingesetzten Farbstoffmischung, so erhält man eine Färbung, die im Farbton ebenfalls mit der auf nicht nachgegerbtem Leder Chromrindleder nach Beispiel 11 erhaltenen Ausfärbung übereinstimmt.

Beispiel 13: Arbeitet man wie im Beispiel 1 beschrieben, verwendet jedoch anstelle der dort eingesetzten Farbstoffmischung 2,4 Teile einer Farbstoffmischung, bestehend aus 1,4 Teilen des gelben Farbstoffes der im Beispiel 1 angegebenen Formel (4) und 1,0 Teilen des blauen Farbstoffes der Formel 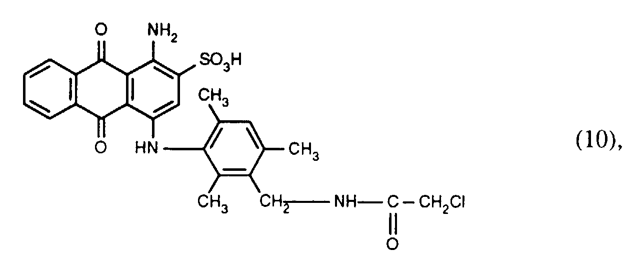 so erhält man ein farbstark grün gefärbtes Leder.

Beispiel 14: Arbeitet man wie im Beispiel 1 beschrieben, verwendet jedoch anstelle der dort eingesetzten Farbstoffmischung 1,6 Teile einer Farbstoffmischung, bestehend aus 0,6 Teilen des roten Farbstoffes der Formel 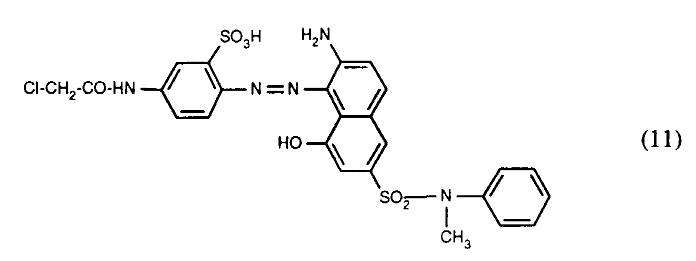 und 1,0 Teilen des blauen Farbstoffes der im Beispiel 11 angegebenen Formel (9), so erhält man ein farbstark violett gefärbtes Leder.

Beispiel 15: Arbeitet man wie im Beispiel 2 beschrieben, verwendet jedoch anstelle der dort eingesetzten Farbstoffmischung 3,20 Teile der im Beispiel 14 eingesetzten Farbstoffmischung, so erhält man eine Färbung, die im Farbton ebenfalls mit der auf nicht nachgegerbtem Leder Chromrindleder nach Beispiel 14 erhaltenen Ausfärbung übereinstimmt.

Beispiel 16: Arbeitet man wie im Beispiel 1 beschrieben, verwendet jedoch anstelle der dort eingesetzten Farbstoffmischung 2,4 Teile einer Farbstoffmischung, bestehend aus 1,4 Teilen des gelben Farbstoffes der im Beispiel 1 angegebenen Formel (4) und 1,0 Teilen des blauen Farbstoffes der Formel 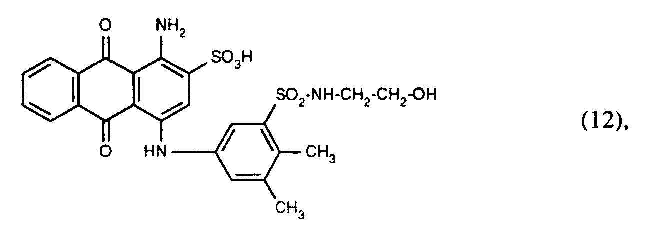 so erhält man ein farbstark grün gefärbtes Leder.

Beispiel 17: Arbeitet man wie im Beispiel 1 beschrieben, verwendet jedoch anstelle der dort eingesetzten Farbstoffmischung 2,7 Teile einer Farbstoffmischung, bestehend aus 1,4 Teilen des gelben Farbstoffes der im Beispiel 1 angegebenen Formel (4) und 1,3 Teilen des roten Farbstoffes der Formel 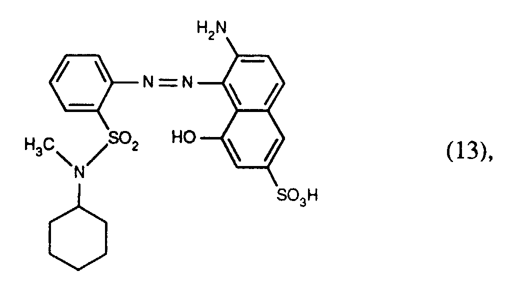 so erhält man ein farbstark orange gefärbtes Leder.

Beispiel 18: Arbeitet man wie im Beispiel 1 beschrieben, verwendet jedoch anstelle der dort eingesetzten Farbstoffmischung 2,08 Teile einer Farbstoffmischung, bestehend aus 1,2 Teilen des gelben Farbstoffes der Formel 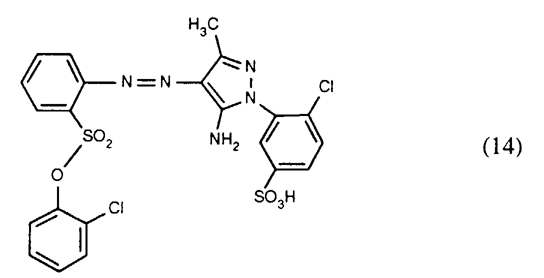 und 0,88 Teilen des blauen Farbstoffes der im Beispiel 1 angegebenen Formel (6), so erhält man ein farbstark grün gefärbtes Leder.

Beispiele 19 bis 36: Nach den in den Beispielen 1, 2 und 4 beschriebenen Verfahren erhält man mit dem dort aufgeführten gelben Farbstoff der Formel (4), dem roten Farbstoff der Formel (5) und dem blauen Farbstoff der Formel (6) bei Anwendung in den angegebenen Mengen (Teile) Lederfärbungen in den angegebenen Nuancen.

| Beispiel | Farstoff (4) | Farbstoff (5) | Farbstoff (6) | Nuance |
|---|---|---|---|---|
| 19 | 1,68 | 0,12 | 0,53 | grünstichig braun |
| 20 | 1,4 | 0,31 | 0,44 | rotstichig braun |
| 21 | 1,20 | 0,17 | 0,76 | grünstichig grau |
| 22 | 0,84 | 0,74 | 0,18 | bordeaux |
| 23 | 0,90 | 0,42 | 0,6 | braun |
| 24 | 1,2 | 0,17 | 0,76 | dunkelgrün |
| 25 | 0,7 | 0,62 | 0,44 | bordeaux |
| 26 | 0,7 | 0,31 | 0,88 | dumpfes violett |
| 27 | 0,42 | 0,87 | 0,26 | bordeaux |
| 28 | 0,28 | 0,74 | 0,53 | blaustichig bordeaux |
| 29 | 1,88 | 0,42 | --- | rotstichig orange |
| 30 | 1,4 | 0,62 | --- | scharlachrot |
| 31 | 0,92 | 0,82 | --- | neutrales rot |
| 32 | --- | 0,42 | 1,18 | violett |
| 33 | --- | 0,62 | 0,88 | rotstichig violett |
| 34 | --- | 0,82 | 0,58 | blaustichig bordeaux |
| 35 | 0,92 | --- | 1,18 | blaustichig grün |
| 36 | 1,40 | --- | 0,88 | grün |

Beispiel 37: Nach den in den Beispielen 1 bis 4 beschriebenen Verfahren erhält man mit 0,62 Teilen des dort aufgeführten roten Farbstoffes der Formel (5), 0,18 Teilen des blauen Farbstoffes der Formel (6) und 1,0 Teilen des schwarzen Farbstoffes der Formel 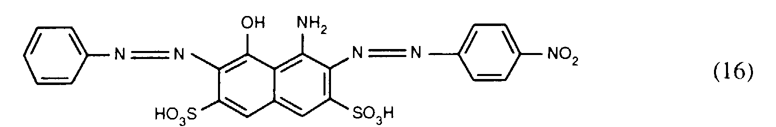 eine Lederfärbungen mit gedeckt violetter Nuance.

Beispiel 38: Nach den in den Beispielen 1 bis 4 beschriebenen Verfahren erhält man mit 0,23 Teilen des dort aufgeführten gelben Farbstoffes der Formel (4), 0,27 Teilen des roten Farbstoffes der Formel (5) und 1,2 Teilen des braunen Farbstoffes der Formel 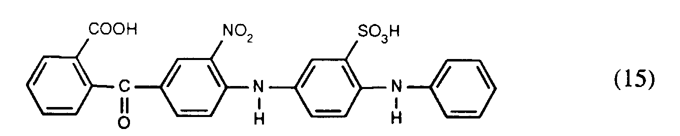 eine Lederfärbungen mit orangebrauner Nuance.

## Patentansprüche

1. Verfahren zum Färben von Leder mit Farbstoffmischungen , dadurch gekennzeichnet, dass man mindestens zwei metallfreie Farbstoffe mit jeweils einer einzigen Sulfogruppe und einem Molekulargewicht zwischen 450 und 700 verwendet, ausgewählt aus der Gruppe, bestehend aus
a) einem gelben Farbstoff der Formel 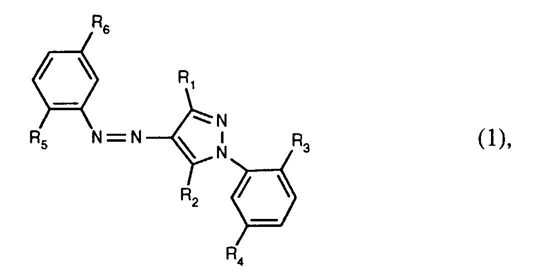 worin
R₁ C₁-C₄-Alkyl,
R₂ OH oder NH₂,
R₃ Wasserstoff oder Halogen,
R₄ Wasserstoff oder Sulfo,
R₅ Wasserstoff, Halogen, Sulfo oder eine Gruppe 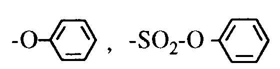 oder 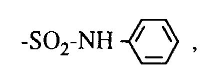 wobei die Phenylreste in den drei letztgenannten Gruppen durch Halogen substituiert sein können, und
R₆ Wasserstoff, Halogen oder eine Gruppe 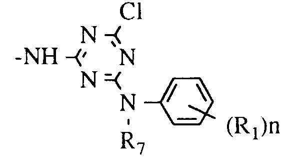 bedeutet , worin R₇ Wasserstoff oder C₁-C₄-Alkyl, R₁ C₁-C₄-Alkyl und n 0, 1, 2 oder 3 bedeutet,
b) einem roten Farbstoff der Formel 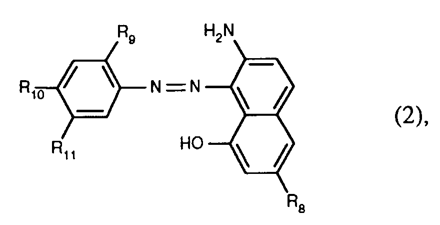 worin
R₈ Sulfo oder 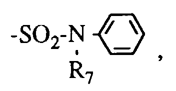
R₉ Sulfo, 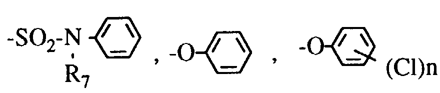 oder eine Gruppe 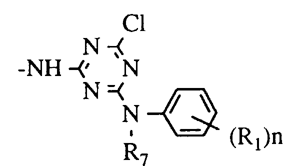 bedeutet, worin R₇ Wasserstoff oder C₁-C₄-Alkyl, R₁ C₁-C₄-Alkyl und n 1, 2 oder 3 bedeutet,
R₁₀ Wasserstoff, C₁-C₄-Alkylcarbonylamino oder Halogen-C₁-C₄-alkylcarbonylamino und
R₁₁ Wasserstoff oder Halogen bedeutet, und
c) einem blauen Farbstoff der Formel 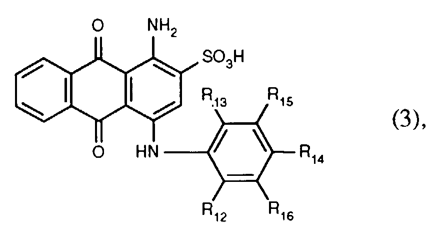 worin R₁₂, R₁₃ und R₁₄ unabhängig voneinander je Wasserstoff oder C₁-C₄-Alkyl,
R₁₅ Wasserstoff, Methyl -SO₂-NH-R₁₇ oder -CH₂-NH-CO-R₁₈ und
R₁₆ Wasserstoff, C₁-C₄-Alkyl oder R₁₅ bedeutet, wobei R₁₇ Hydroxy-C₁-C₄-Alkyl und
R₁₈ Phenyl oder Halogen-C₁-C₄-alkyl bedeutet.

2. Verfahren gemäss Anspruch 1, dadurch gekennzeichnet, dass man zum Trichromiefärben eine Farbstoffmischung, enthaltend einen gelben Farbstoff der Formel (1), einen roten Farbstoff der Formel (2) und einen blauen Farbstoff der Formel (3), verwendet.

3. Verfahren gemäss Ansprüchen 1 und 2, dadurch gekennzeichnet, dass man einen gelben Farbstoff der Formel (1) verwendet, worin R₁ Methyl bedeutet.

4. Verfahren gemäss einem der Ansprüche 1 bis 3, dadurch gekennzeichnet, dass man einen gelben Farbstoff der Formel (1) verwendet, worin R₃ Chlor bedeutet.

5. Verfahren gemäss einem der Ansprüche 1 bis 4, dadurch gekennzeichnet, dass man einen gelben Farbstoff der Formel (1) verwendet, worin R₄ Sulfo oder Wasserstoff bedeutet

6. Verfahren gemäss einem der Ansprüche 1 bis 5, dadurch gekennzeichnet, dass man einen gelben Farbstoff der Formel (1) verwendet, worin R₅ Sulfo oder eine Gruppe 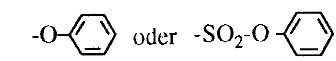 bedeutet, wobei die Phenylreste in den beiden letztgenannten Gruppen unsubstituiert oder durch Chlor substituiert sind.

7. Verfahren gemäss einem der Ansprüche 1 bis 6, dadurch gekennzeichnet, dass man einen gelben Farbstoff der Formel (1) verwendet, worin R₆ Wasserstoff, Chlor oder eine Gruppe 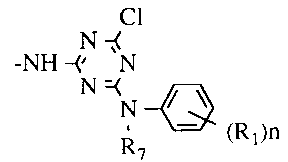 bedeutet, worin R₇ Wasserstoff, Methyl oder Ethyl, R₁ Methyl und n 0, 1 oder 2 bedeutet.

8. Verfahren gemäss einem der Ansprüche 1 bis 7, dadurch gekennzeichnet, dass man den gelben Farbstoff der Formel 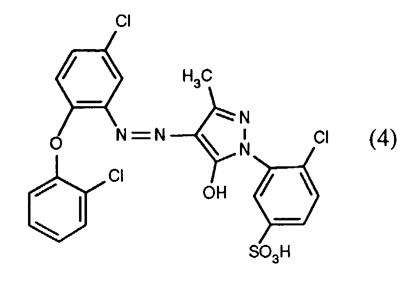 verwendet.

9. Verfahren gemäss einem der Ansprüche 1 bis 8, dadurch gekennzeichnet, dass man einen roten Farbstoff der Formel (2) verwendet, worin R₈ Sulfo oder 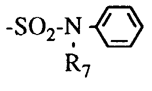 bedeutet, wobei R₇ Methyl oder Ethyl bedeutet.

10. Verfahren gemäss einem der Ansprüche 1 bis 9, dadurch gekennzeichnet, dass man einen roten Farbstoff der Formel (2) verwendet, worin R₉ Sulfo, 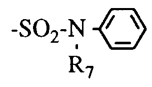 oder 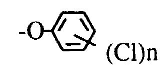 bedeutet, wobei R₇ Methyl oder Ethyl und n 1 bedeutet.

11. Verfahren gemäss einem der Ansprüche 1 bis 10, dadurch gekennzeichnet, dass man einen roten Farbstoff der Formel (2) verwendet, worin R₁₀ Wasserstoff oder Chlormethylcarbonylamino bedeutet.

12. Verfahren gemäss einem der Ansprüche 1 bis 11, dadurch gekennzeichnet, dass man einen roten Farbstoff der Formel (2) verwendet, worin R₁₁ Wasserstoff oder Chlor bedeutet.

13. Verfahren gemäss einem der Ansprüche 1 bis 12, dadurch gekennzeichnet, dass man den roten Farbstoff der Formel 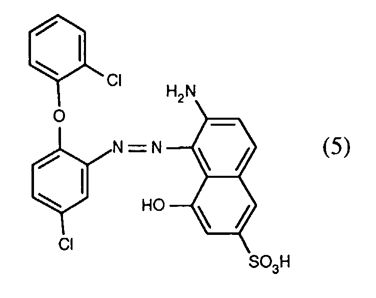 verwendet.

14. Verfahren gemäss einem der Ansprüche 1 bis 13, dadurch gekennzeichnet, dass man einen blauen Farbstoff der Formel (3) verwendet, worin R₁₄ Methyl und R₁₂ und R₁₃ Wasserstoff oder Methyl bedeuten.

15. Verfahren gemäss einem der Ansprüche 1 bis 14, dadurch gekennzeichnet, dass man einen blauen Farbstoff der Formel (3) verwendet, worin R₁₅ Wasserstoff, Methyl oder -CH₂-F-CO-CH₂-Cl bedeutet.

16. Verfahren gemäss einem der Ansprüche 1 bis 15, dadurch gekennzeichnet, dass man einen blauen Farbstoff der Formel (3) verwendet, worin, worin R₁₆ -SO₂-NH-C₂H₄-OH, -CH₂-NH-CO-CH₂-Cl oder -CH₂-NH-CO-C₆H₅ bedeutet.

17. Verfahren gemäss einem der Ansprüche 1 bis 16, dadurch gekennzeichnet, dass man den blauen Farbstoff der Formel 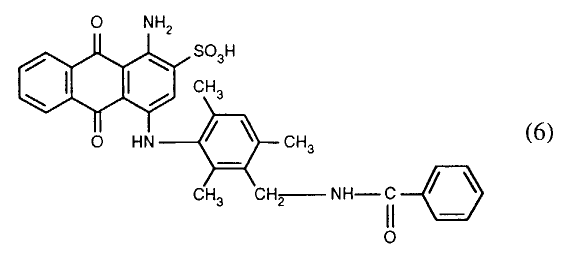 verwendet.

18. Verfahren gemäss einem der Ansprüche 1 bis 17, dadurch gekennzeichnet, dass man mindestens zwei Farbstoffe verwendet, deren Parachor zwischen 900 und 1200 liegt und deren log P zwischen 1 und 4 liegt.

19. Verfahren gemäss einem der Ansprüche 1 bis 18, dadurch gekennzeichnet, dass man zusätzlich einen schwarzen Farbstoff der Formel 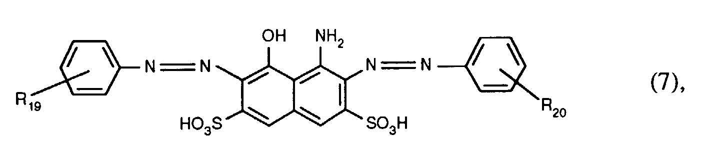 worin R₁₉ Wasserstoff, C₁-C₄-Alkyl, C₁-C₄-Alkoxy oder C₁-C₄-Alkanoylamino und R₂₀ Chlor oder Nitro bedeutet,
oder einen braunen Farbstoff der Formel 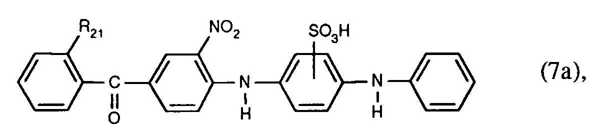 worin R₂₁ -COOH, -CONH₂, -SO₃H oder -SO₃NH₂ bedeutet, verwendet.

20. Verfahren gemäss einem der Ansprüche 1 bis 19, dadurch gekennzeichnet, dass man zusätzlich den schwarzen Farbstoff der Formel 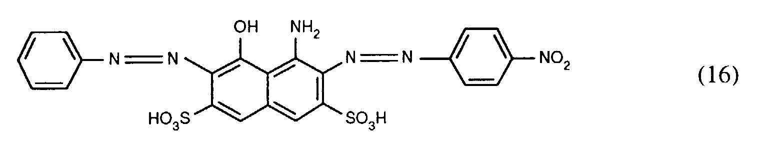 oder den braunen Farbstoff der Formel 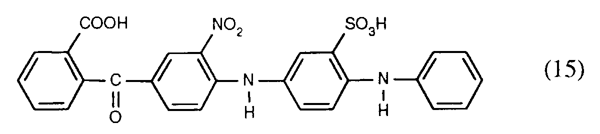 verwendet.

21. Verfahren gemäss den Ansprüchen 1, 2, 8, 13 und 17, dadurch gekennzeichnet, dass man zum Trichromiefärben eine Farbstoffmischung, enthaltend den gelben Farbstoff der Formel (4), den roten Farbstoff der Formel (5) und den blauen Farbstoff der Formel (6), verwendet.

22. Verfahren gemäss einem der Ansprüche 1 bis 21, dadurch gekennzeichnet, dass man eine Färbeflotte verwendet, welche zusätzlich ein farbvertiefendes Hilfsmittel enthält.

23. Verfahren gemäss Anspruch 22, dadurch gekennzeichnet, dass man eine Färbeflotte verwendet, welche als farbvertiefendes Hilfsmittel ein ethoxyliertes Alkylamin enthält.

24. Das nach dem Verfahren gemäss den Ansprüchen 1 bis 23 gefärbte Leder.

## Claims

1. A process for dyeing leather with dye mixtures, which comprises using at least two metal-free dyes each carrying a single sulfo group and having a molecular weight of between 450 and 700, selected from the group consisting of
a) a yellow dye of formula 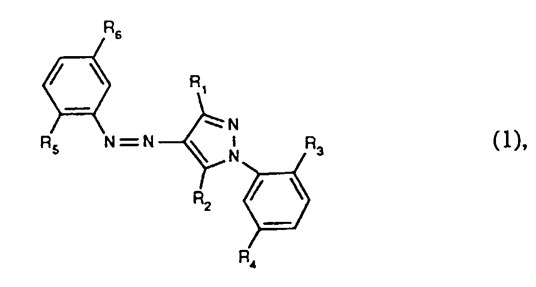 wherein
R₁ is C₁-C₄alkyl
R₂ is OH or NH₂,
R₃ is hydrogen or halogen,
R₄ is hydrogen or sulfo,
R₅ is hydrogen, halogen, sulfo or a group 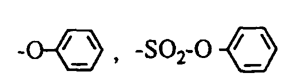 or 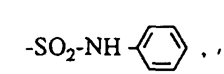 the phenyl radicals of which three latter groups may be substituted by halogen, and
R₆ is hydrogen, halogen or a group 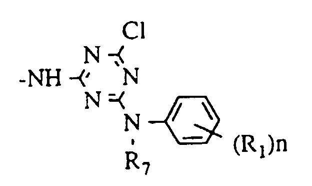 wherein R₇ is hydrogen or C₁-C₄alkyl, R₁ is C₁-C₄alkyl and n is 0, 1, 2 or 3,
b) a red dye of formula 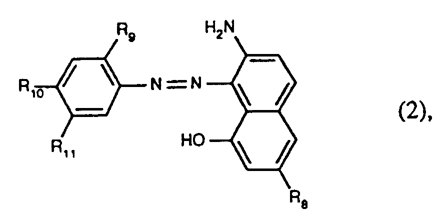 wherein
R₈ is sulfo or 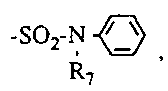
R₉ is sulfo, 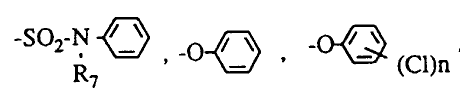 or a group 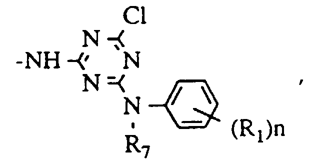 wherein R₇ is hydrogen or C₁-C₄alkyl, R₁ is C₁-C₄alkyl
and n is 1, 2 or 3,
R₁₀ is hydrogen, C₁-C₄alkylcarbonylamino or halo-C₁-C₄alkylcarbonylamino, and R₁₁ is hydrogen or halogen, and
c) a blue dye of formula 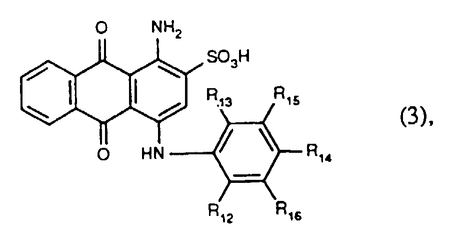 wherein R₁₂, R₁₃ and R₁₄ are each independently of one another hydrogen or C₁-C₄alkyl, R₁₅ is hydrogen, methyl, -SO₂-NH-R₁₇ or -CH₂-NH-CO-R₁₈, and R₁₆ is hydrogen, C₁-C₄alkyl or R₁₅, and R₁₇ is hydroxy-C₁-C₄alkyl and R₁₈ is phenyl or halo-C₁-C₄alkyl.

2. A process according to claim 1, which comprises using for trichromatic dyeing a dye mixture comprising a yellow dye of formula (1), a red dye of formula (2) and a blue dye of formula (3).

3. A process according to claims 1 and 2, which comprises using a yellow dye of formula (1) wherein R₁ is methyl.

4. A process according to one of claims 1 to 3, which comprises using a yellow dye of formula (1) wherein R₃ is chloro.

5. A process according to one of claims 1 to 4, which comprises using a yellow dye of formula (1) wherein R₄ is sulfo or hydrogen.

6. A process according to one of claims 1 to 5. which comprises using a yellow dve of formula (1) wherein R₅ is sulfo or a group 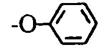 or 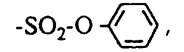 the phenyl radicals of which two latter groups are unsubstituted or substituted by chloro.

7. A process according to one of claims 1 to 6, which comprises using a yellow dye of formula (1) wherein R₆ is hydrogen, chloro or a group 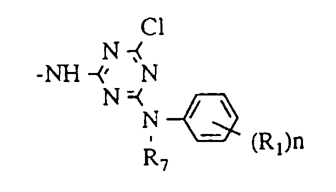 wherein R₇ is hydrogen, methyl or ethyl, R₁ is methyl and n is 0, 1 or 2.

8. A process according to one of claims 1 to 7, which comprises using the yellow dye of formula

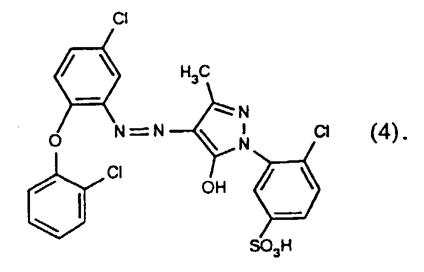

9. A process according to one of claims 1 to 8, which comprises using a red dye of formula (2) wherein R₈ is sulfo or 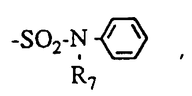 wherein R₇ is methyl or ethyl.

10. A process according to one of claims 1 to 9, which comprises using a red dye of formula (2) wherein R₉ is sulfo, 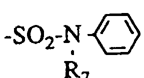 or 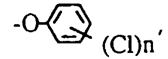 wherein R₇ is methyl or ethyl and n is 1.

11. A process according to one of claims 1 to 10, which comprises using a red dye of formula (2) wherein R₁₀ is hydrogen or chloromethylcarbonylamino.

12. A process according to one of claims 1 to 11, which comprises using a red dye of formula (2) wherein R₁₁ is hydrogen or chloro.

13. A process according to one of claims 1 to 12, which comprises using the red dye of formula

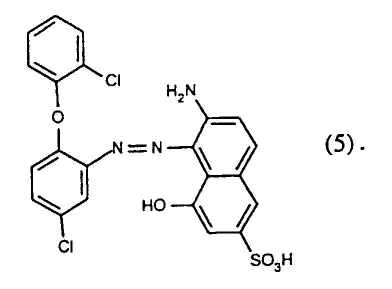

14. A process according to one of claims 1 to 13, which comprises using a blue dye of formula (3) wherein R₁₄ is methyl and R₁₂ and R₁₃ are hydrogen or methyl.

15. A process according to one of claims 1 to 14, which comprises using a blue dye of formula (3) wherein R₁₅ is hydrogen, methyl or -CH₂-NH-CO-CH₂-Cl.

16. A process according to one of claims 1 to 15, which comprises using a blue dye of formula (3) wherein R₁₆ is -SO₂-NH-C₂H₄-OH, -CH₂-NH-CO-CH₂-Cl or -CH₂-NH-CO-C₆H₅.

17. A process according to one of claims 1 to 16, which comprises using the blue dye of formula

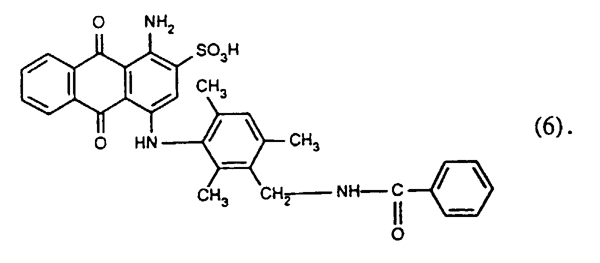

18. A process according to one of claims 1 to 17, which comprises using at least two dyes whose parachor is between 900 and 1200 and whose log P is between 1 and 4.

19. A process according to one of claims 1 to 18, which comprises additionally using a black dye of formula 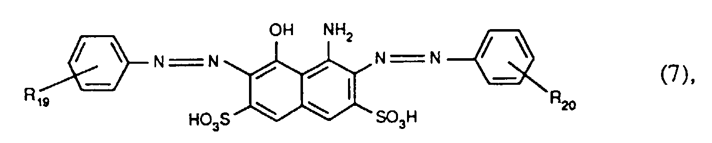 wherein R₁₉ is hydrogen, C₁-C₄alkyl, C₁-C₄alkoxy or C₁-C₄alkanoylamino and R₂₀ is chloro or nitro,
or a brown dye of formula 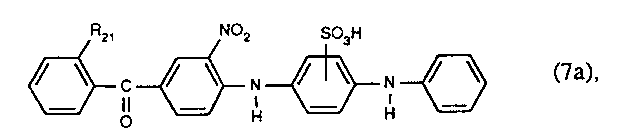 wherein R₂₁ is -COOH, -CONH₂, -SO₃H or -SO₃NH₂.

20. A process according to one of claims 1 to 19, which comprises additionally using the black dye of formula 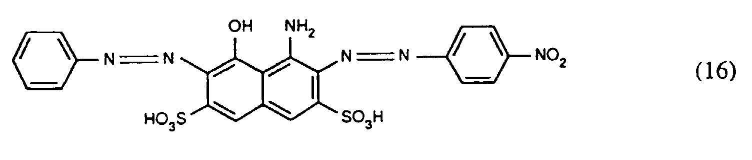 or the brown dye of formula

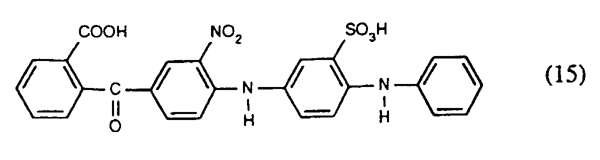

21. A process according to claims 1, 2, 8, 13 and 17, which comprises using for trichromatic dyeing a dye mixture comprising the yellow dye of formula (4), the red dye of formula (5) and the blue dye of formula (6).

22. A process according to one of claims 1 to 21, which comprises using a dyeing liquor which additionally contains a colour intensifier.

23. A process according to claim 22, which comprises using a dyeing liquor which contains an ethoxylated alkylamine as colour intensifier.

24. Leather dyed by a process according to claims 1 to 23.

## Revendications

1. Procédé pour la teinture du cuir avec des mélanges de colorants, caractérisé en ce que l'on utilisé au moins deux colorants exempts de métaux comportant chacun un seul groupe sulfo et ayant une masse moléculaire comprise entre 450 et 700, choisis dans le groupe formé par
a) un colorant jaune de formule 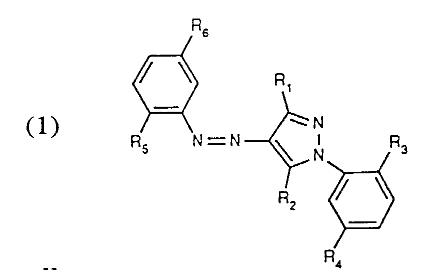 dans laquelle
R₁ représente un groupe alkyle en C₁₋₄,
R₂ représente un groupe OH ou NH₂,
R₃ représente un atome d'hydrogène ou d'halogène,
R₄ représente un atome d'hydrogène ou un groupe sulfo,
R₅ représente un atome d'hydrogène ou d'halogène, ou un groupe sulfo ou 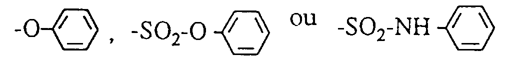 les résidus phényle de ces trois derniers groupes pouvant être halogénés, et
R₆ représente un atome d'hydrogène ou d'halogène ou un groupe 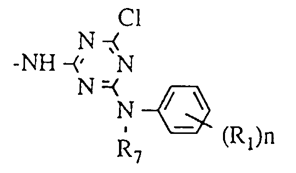 où R₇ est un atome d'hydrogène ou un groupe alkyle en C₁₋₄ , R₁ est un groupe alkyle en C₁₋₄ et n vaut 0, 1, 2 ou 3,
b) un colorant rouge de formule 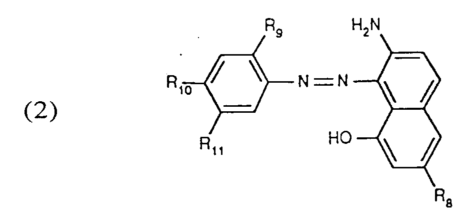 dans laquelle
R₈ est un groupe sulfo ou un groupe 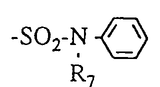
R₉ est un groupe sulfo, 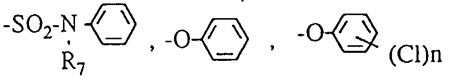 ou un groupe 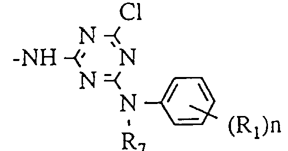
où R₇ représente un atome d'hydrogène ou un résidu alkyle en C₁₋₄, R₁ représente un groupe alkyle en C₁₋₄ et n vaut 1, 2 ou 3,
R₁₀ est un atome d'hydrogène, un résidu (alkyle en C₁₋₄)-carbonylamino ou halogéno-(alkyle en C₁₋₄)-carbonylamino et
R₁₁ repésente un atome d'hydrogène ou d'halogène, et
c) un colorant bleu de formule 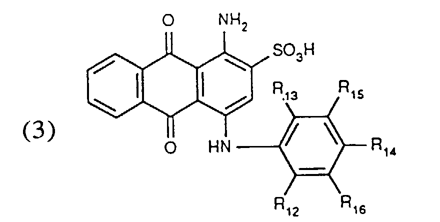 dans laquelle
R₁₂, R₁₃ et R₁₄ représentent, indépendamment l'un de l'autre, chacun un atome d'hydrogène ou un groupe alkyle en C₁₋₄,
R₁₅ représente un atome d'hydrogène, un groupe méthyle, -SO₂-NH-R₁₇ ou -CH₂-NH-CO-R₁₈ et
R₁₆ représente un atome d'hydrogène, un groupe alkyle en C₁₋₄ ou R₁₅, où
R₁₇ représente un groupe hydroxyalkyle en C₁₋₄ et R₁₈ un groupe phényle ou halogénoalkyle en C₁₋₄.

2. Procédé conforme à la revendication 1, caractérisé en ce que l'on utilise pour la teinture en trichromie un mélange de colorant contenant un colorant jaune de formule (1), un colorant rouge de formule (2) et un colorant bleu de formule (3).

3. Procédé conforme aux revendications 1 et 2, caractérisé en ce que l'on utilise un colorant jaune de formule (1) dans lequel R₁ est un résidu méthyle.

4. Procédé conforme à une des revendications 1 à 3, caractérisé en ce que l'on utilise un colorant j aune de formule (1) dans lequel R₃ représente un atome de chlore.

5. Procédé conforme à une des revendications 1 à 4, caractérisé en ce que l'on utilise un colorant jaune de formule (1) dans lequel R₄ est un groupe sulfo ou un atome d'hydrogène.

6. Procédé conforme à une des revendications 1 à 5, caractérisé en ce que l'on utilise un colorant j aune de formule (1) dans lequel R₅ est un groupe sulfo ou un groupe O-phényle ou -SO₂-O-phényle, les résidus phényle de ces deux derniers groupes pouvant être non substitués ou chlorés.

7. Procédé conforme à une des revendications 1 à 6, caractérisé en ce que l'on utilise un colorant jaune de formule (1) dans lequel R₆ est un atome d'hydrogène ou de chlore ou un groupe 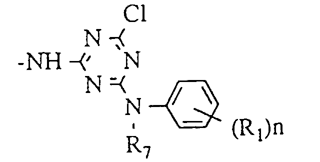 où R₇ représente un atome d'hydrogène, un groupe méthyle ou éthyle, R₁ représente un résidu méthyle et n vaut 0, 1 ou 2.

8. Procédé conforme à une des revendications 1 à 7, caractérisé en ce que l'on utilise le colorant jaune de formule

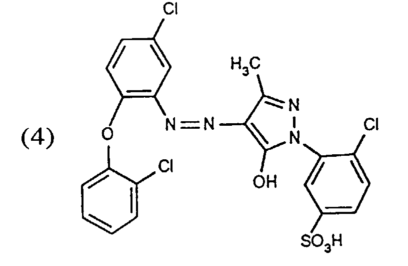

9. Procédé conforme à une des revendications 1 à 8, caractérisé en ce que l'on utilise un colorant rouge de formule (2) dans lequel R₈ représente un résidu sulfo ou 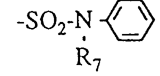 où R₇ est un groupe méthyle ou éthyle.

10. Procédé conforme à une des revendications 1 à 9, caractérisé en ce que l'on utilise un colorant rouge de formule (2) dans lequel R₉ est un groupe sulfo, 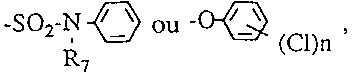 où R₇ est un groupe méthyle ou éthyle et n vaut 1.

11. Procédé conforme à une des revendications 1 à 10, caractérisé en ce que l'on utilise un colorant rouge de formule (2) dans lequel R₁₀ est un atome d'hydrogène ou un groupe chlorométhylcarbonylamino.

12. Procédé conforme à une des revendications 1 à 11, caractérisé en ce que l'on utilise un colorant rouge de formule (2) dans lequel R₁₁ est un atome d'hydrogène ou de chlore.

13. Procédé conforme à une des revendications 1 à 12, caractérisé en ce que l'on utilise un colorant rouge de formule

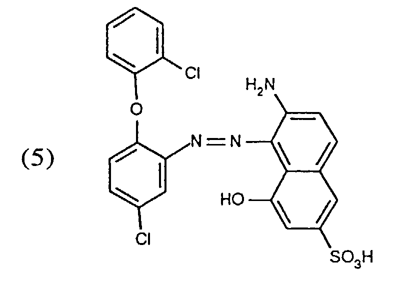

14. Procédé conforme à une des revendications 1 à 13, caractérisé en ce que l'on utilise un colorant bleu de formule (3) dans lequel R₁₄ représente un groupe méthyle et R₁₂ et R₁₃ représentent un atome d'hydrogène ou un groupe méthyle.

15. Procédé conforme à une des revendications 1 à 14, caractérisé en ce que l'on utilise un colorant bleu de formule (3) dans lequel R₁₅ représente un atome d'hydrogène, un groupe méthyle ou -CH₂-NH-CO-CH₂-Cl.

16. Procédé conforme à une des revendications 1 à 15, caractérisé en ce que l'on utilise un colorant bleu de formule (3) dans lequel R₁₆ représente un groupe -SO₂-NH-C₂H₄-OH, -CH₂-NH-CO-CH₂-Cl ou -CH₂-NHCO-C₆H₅.

17. Procédé conforme à une des revendications 1 à 16, caractérisé en ce que l'on utilise le colorant bleu de formule

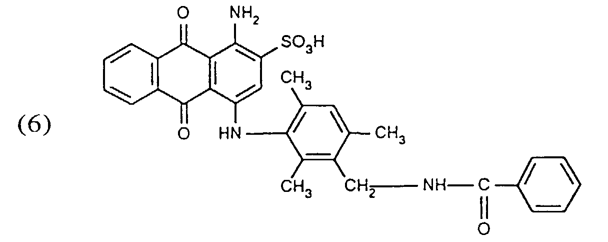

18. Procédé conforme à une des revendications 1 à 17, caractérisé en ce que l'on utilise au moins deux colorants ayant un parachor compris entre 900 et 1200 et dont la valeur de log P est comprise entre 1 et 4.

19. Procédé conforme à une des revendications 1 à 18, caractérisé en ce que l'on utilise en plus un colorant noir de formule 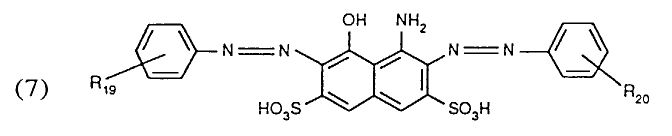 dans lequel R₁₉ représente un atome d'hydrogène, un groupe alkyle en C₁₋₄, alcoxy en C₁₋₄ ou (alcanoyle en C₁₋₄)-amino et R₂₀ est un atome de chlore ou un groupe nitro, ou un colorant marron de formule 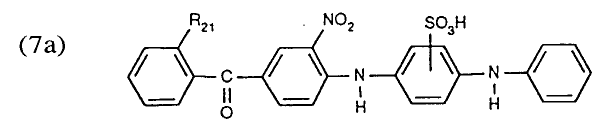 dans laquelle R₂₁ est un groupe -COOH, -CONH₂, -SO₃H ou -SO₃NH₂..

20. Procédé conforme à une des revendications 1 à 19 caractérisé en ce que l'on utilise en plus le colorant noir de formule 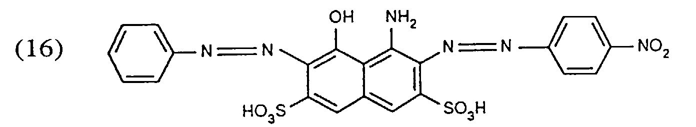 ou le colorant marron de formule

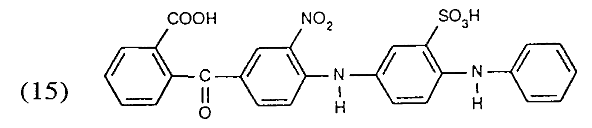

21. Procédé conforme aux revendications 1, 2, 8, 13 et 17, caractérisé en ce que l'on utilise pour la teinture en trichromie un mélange de colorants contenant le colorant jaune de formule (4), le colorant rouge de formule (5) et le colorant bleu de formule (6).

22. Procédé conforme à une des revendications 1 à 21, caractérisé en ce que l'on utilise un bain de teinture contenant en plus un agent de renforcement de la couleur.

23. Procédé conforme à la revendication 22, caractérisé en ce que l'on utilise un bain de teinture contenant, comme agent de renforcement de la couleur, une alkylamine éthoxylée.

24. Cuir teint selon le procédé conforme aux revendications 1 à 23.
